# EUROPÄISCHE PATENTSCHRIFT

(11) **EP 3 006 894 B1**
(45) Veröffentlichungstag und Bekanntmachung des Hinweises auf die Patenterteilung: **01.03.2017**
(21) Anmeldenummer: 14188460.1
(22) Anmeldetag: 10.10.2014
(51) Int. Cl.: G01C 15/00, F16C 11/06, F16D 3/22

(54) **VERMESSUNGSGERÄT MIT KUGELPUNKTLAGERUNG**
SURVEYING DEVICE WITH BALL POINT BEARING
DISPOSITIF D'ARPENTAGE AVEC PALIER À ROTULE

(43) Veröffentlichungstag der Anmeldung: 13.04.2016
(73) Patentinhaber: Leica Geosystems AG, 9435 Heerbrugg (CH)
(72) Erfinder: Müller, Josef, 9413 Oberegg (CH); Petkov, Stefan, CH-8890 Flums (CH); Schöll, Benjamin, CH-9213 Hauptwil (CH)
(74) Vertreter: Kaminski Harmann

(56) Entgegenhaltungen:
- WO-A1-2011/098127
- CH-A5- 582 346
- US-A- 4 455 758

## Beschreibung

Die Erfindung betrifft ein Vermessungsgerät nach dem Oberbegriff des Anspruchs 1.

In vielen Vermessungsgeräten ist die Ausrichtung von gerichteter optischer Messstrahlung, z.B. durch Ausrichtung von den Strahlgang integrierenden Komponenten oder eine Fokussierung auf ein Ziel, erforderlich. Dabei muss diese Modifizierung präzise und bei dynamischen Anwendungen auch hinreichend schnell erfolgen, so dass beispielsweise grosse zu bewegende Massen nachteilig sind. Zudem erfordert die Feldtauglichkeit des Messgerätes grundsätzlich Robustheit des Antriebs und der Lagerungen sowie einen geringen Stromverbrauch.

Ein industrielles oder geodätisches Vermessungsgerät weist in der Regel eine Stehachse und eine Kippachse auf, welche gelagert sind und angetrieben werden. Beispiele für solche Messgeräte sind Totalstationen, Theodoliten oder Tachymeter, welche - auch zusammen mit integrierten automatischen Zielerfassungs- und Zielverfolgungs-Einrichtungen - für vielfältige Vermessungsaufgaben zum Einsatz kommen, wobei sowohl eine Datengewinnung als auch eine reine Überprüfung, wie z.B. in der Bauwerksüberwachung, in Frage kommen. Andere Messgeräte sind beispielsweise Scannersysteme wie Lasertracker, Laserscanner oder Profiler, die im abtastenden Verfahren Topographien von Oberflächen als dreidimensionale Punktwolken aufnehmen.

Die Präzision der Achsen zeichnet sich vor allem durch die Lagerungen aus. Die Lagerungen müssen formgenau, formstabil und schockresistent bzw. vor Schock schützbar sein. Um Positioniervorgänge in sehr kleinen Winkelabschnitten hochpräzise ausführen zu können, sind zudem äusserst geringe Reibung gefordert, wobei insbesondere die Reibkraft beim Übergang von Haften zu Gleiten relevant ist.

In bisherigen Lösungen kommen für die Zwecke der Lagerung häufig Wälzlager und/oder Gleitlager zum Einsatz. Derartige Lager benötigen jedoch relativ viel Bauraum, insbesondere auch weil meist je mindestens ein Lager für die axiale und eines für die radiale Lagerung verbaut werden müssen. Durch diesen Umstand bedingt entstehen ein erhöhter konstruktiver und fertigungstechnischer Aufwand und damit höhere Kosten. Auch werden durch den Mangel an Kompaktheit mehr Massen bewegt.

Die WO2011/098127 A1 offenbart eine Totalstation, bei der die Gier- und die Neigekomponente mit herkömmlichen Kugellagern gelagert sind.

Eine Aufgabe der vorliegenden Erfindung besteht darin, ein industrielles oder geodätisches Vermessungsgerät bereitzustellen, das Lagerungen für seine Drehkomponenten aufweist, welche verschleissbedingtes Lagerspiel spontan ausgleichen und damit geometrische Stabilität gewährleisten.

Eine weitere Aufgabe besteht darin, ein industrielles oder geodätisches Vermessungsgerät bereitzustellen, das eine verringerte Zahl an und/oder Komplexität seiner Lagerungskomponenten bzw. eine verringerte Baugrösse aufweist.

Eine weitere Aufgabe besteht darin, ein industrielles oder geodätisches Vermessungsgerät bereitzustellen, das einen Schutzmechanismus gegen Erschütterungsschäden aufweist, sodass bei Erschütterung die Wahrscheinlichkeit eines Auftretens von Schäden am Lager verringert wird.

Diese Aufgaben werden durch die Gegenstände des Anspruchs 1 oder der abhängigen Ansprüche gelöst bzw. die Lösungen weitergebildet.

Ein erfindungsgemässes Vermessungsgerät, insbesondere eine Totalstation, ein Tracker oder Scanner, hat wenigstens einen optischen Messstrahlgang, eine Basis zur Positionierung des Vermessungsgerätes, eine auf der Basis um eine Stehachse drehbar gelagerte Gierkomponente zur azimuthalen Ausrichtung des optischen Strahlgangs und eine in der Gierkomponente um eine Kippachse drehbar gelagerte Neigkomponente zur elevativen Ausrichtung des optischen Strahlgangs.

Erfindungsgemäss ist das Vermessungsgerät so ausgebildet, dass es zur Lagerung seiner Komponenten Kugelpunktlager verwendet. Durch ein Kugelpunktlager erfolgt erfindungsgemäss die Lagerung mindestens einer zu drehenden Komponente des geodätischen Messgerätes. Diese Komponente modifiziert einen zur Messung verwendeten Strahlgang, z.B. durch eine Ausrichtung bzw. Änderung der Ausrichtung.

Ein Kugelpunktlager zeichnet sich dadurch aus, dass mittels eines Rotationskörpers - insbesondere einer Kugel, oder auch etwa mittels eines Ovoids, Doppelkegels (mit voneinander fort weisenden Spitzen), Doppelkegelstumpfes oder einer Kombination der genannten Körper - ein Rotor relativ zu einem Stator gelagert ist, wobei die drei beteiligten Komponenten stabil aneinander ausgerichtet bleiben, indem Rotor und Stator einen speziell geformten, zentrierenden Sitz für den Rotationskörper aufweisen. Dieser Sitz ist eine Kavität, die den Rotationskörper selbstzentrierend und stabil einfasst. Die Kavität kann beispielsweise torisch, kegelförmig, konisch, sphärisch oder asphärisch sein. Der Rotationskörper ist dabei nur soweit in der jeweiligen Kavität versenkt bzw. ragt noch soweit aus der jeweiligen Kavität heraus, dass der Rotor am Rotationskörper und der Rotationskörper am Stator abgleiten, ohne dass sich Rotor und Stator berühren.

Alternativ kann der Rotationskörper an Rotor oder Stator - etwa durch Verklemmen, Verkleben oder Verschweissen - fixiert bzw. darin eingelassen sein, sodass ein Gleiten nur auf der jeweils anderen Seite stattfindet. Das herausragende Ende des Rotationskörpers ist dann eine rotationssymmetrische Erhabenheit, insbesondere eine Halbkugel, ein Halbovoid, ein Kegel, ein Kegelstumpf oder eine Asphäre. Alternativ kann diese Erhabenheit auch gleich in das Bauteil - etwa durch spanende Bearbeitung - eingearbeitet sein, wodurch der Rotationskörper Bestandteil des Rotors oder Stators wird, wobei hinsichtlich des Verschleisses auf die Materialhärte Rücksicht genommen werden muss.

Der lose Rotationskörper wird für einen stabilen Sitz zwischen Stator und Rotor eingespannt, etwa durch ein axial wirksames Federelement oder einen Magneten oder Elektromagneten, der für den Zusammenhalt von Rotor und Stator sorgt.

Entgegen der Bezeichnung "Kugelpunktlager" herrscht kein Punktkontakt zwischen dem Rotationskörper und der Kavität des Rotors bzw. Stators, sondern zumindest ein Drei-Punkt-Kontakt (Kavität ist z.B. eine dreiseitige Pyramide) und bevorzugt ein zumindest abschnittsweise linienförmiger Kontakt (Kavität ist rotationssymmetrisch) oder gar ein Flächenkontakt, welcher beispielsweise durch bewusstes Abformen des Rotationskörpers in die Kavität erreicht werden kann. Die Bezeichnung "Kugelpunktlager" nimmt stattdessen Bezug auf den durch den Rotationskörper - bevorzugt eine Kugel - etablierten Angelpunkt der Lagerung.

Das Kugelpunktlager realisiert erfindungsgemäss zugleich eine axiale sowie radiale Lagerung anhand nur eines einzigen Elementes auf vergleichsweise kleinem Bauraum. Eine Kugel wird zwischen der Kavität einer rotierenden Komponente (Rotor) und der Kavität einer feststehenden Komponente (Stator) eingespannt, wobei sich die rotierende Komponente und die feststehende Komponente einander gegenüberstehen und die Mittelachsen der Kavitäten entweder koaxial verlaufen oder sich in der Kugel kreuzen. Zur Vorspannung bzw. Einspannung kann insbesondere ein für die Anpressung eines die Achse antreibenden Ultraschallmotors, insbesondere eines Wanderwellenmotors, ohnehin benötigtes Federelement dienen. Ebenfalls kann die als Nebeneffekt auftretende Axialkraft beim Einsatz eines Axialflussmotors (axial flux machine) diesem Zwecke dienen.

Sind die Kavitäten beispielsweise konisch ausgeprägt, weist die Kugel zu beiden Seiten eine ringförmige Kontaktlinie auf. Entlang dieser Kontaktlinien gleiten die Bauteile rotatorisch aneinander ab. Dadurch, dass dieser Auflagedurchmesser der Kugel klein ist, sind die durch Haftreibung und Gleitreibung bedingten Widerstandsmomente zwischen den Materialien der Kavität und des Rotationskörpers deutlich geringer als bei konventionellen Lagerungen. Dadurch wird also - auch bei hohen Vorspannkräften - ein nur minimaler Widerstand bei der Rotation bewirkt. Dies führt zu geringerer Verlustleistung und somit zu längerer Batterielaufzeit.

Aus tribologischer Sicht stellt das Kugelpunktlager somit ein Gleitlager dar. Daher ist die Tragfähigkeit des Kugelpunktlagers derjenigen eines Wälzlagers bei gleichem Baumraum überlegen.

Durch die geringen bewegten Massen ist das Messgerät hochdynamisch auslegbar, so dass zugleich die für einen Abtast- bzw. Scanvorgang notwendigen hohen Geschwindigkeiten erreicht werden können. Ein erfindungsgemässes Messgerät ist somit auch als Zielverfolgungssystem, Lasertracker, Scanner oder Profiler ausgestaltbar.

Durch den einfachen Aufbau von Kugelpunktlagern und die erfindungsgemässe Auslegung eines geodätischen Messgerätes ist zudem ein wartungsfreier oder hinsichtlich der Wartung reduzierter Betrieb des Gerätes möglich. Einsetzbar für das Kugelpunktlager sind Lagerkugeln, z.B. aus gehärtetem Stahl, Keramik oder anderen harten Werkstoffen, welche mit vergleichsweise geringem Aufwand und zudem hochpräzise gefertigt werden.

Die konische Kavität im jeweiligen Bauteil kann ggf. aus der Zentrierbohrung entstehen oder gar die Zentrierbohrung selbst (ohne weitere Bearbeitungsschritte) sein, welche ohnehin für die Einspannung des Bauteils beim Dreh- und/oder Schleifprozess auf der Stirnseite benötigt wird. Alle auf der Dreh- und/oder Schleifmaschine bearbeiteten Bauteilflächen sind zu der Achse der Kavität hochpräzise konzentrisch bzw. senkrecht, weil die Achse des Bearbeitungsprozesses eben dieser Achse gleicht.

Im Falle von Erschütterungen drohen im Inneren eines Vermessungsgerätes ultrapräzise Konstruktionen und Bauteile zu Schaden zu kommen. Das Kugelpunktlager ist daher derart axial vorgespannt, etwa über eine Magnet- oder Federkraft, dass die Konstruktion gegen eine radiale Erschütterung geschützt ist. Der Rotor kann im Falle eines radialen Schocks zumindest zeitweilig "ausklinken" und damit einen Stoss "abfangen", indem der Rotationskörper seinen zentrierten Soll-Lagersitz verlässt. Entgegen der Vorspannkraft kann der Rotor damit um eine axiale Wegstrecke zurückfedern, da der Rotationskörper entlang der Mantelfläche mindestens einer der beiden konischen Kavitäten abrollt. Ein vollständiges Verlassen des Rotationskörpers aus der Kavität wird jedoch dadurch verhindert, dass die Ausklinkstrecke des Rotors radial begrenzt ist durch einen Anschlag.

Gegen Schocks in axialer Richtung ist die Kugelpunktlagerung ebenfalls resistent. Das Lagerkugelmaterial ist härter gewählt, als das der Lagersitze. Somit findet allenfalls eine Deformierung der Lagersitze insofern statt, als dass die Kugeln sich ihren Umfang in den Lagersitz abformen. Die kugelförmige zentrierte Abformung ändert jedoch nichts an der Zentriertheit des Lagersitzes.

In einer weiteren Ausführung der Erfindung ist ein horizontales Kugelpunktlager mit einem zusätzlichen Radialschock-Schutz ausgestattet. Hierzu sorgt eine weitere - beispielhaft konusförmige - Kavität, die als Rinne in die Mantelfläche der ersten Kavität eingelassen ist, dafür, dass die Kugel beim oben geschilderten "Ausklinken" nicht mit nur einem Umfangspunkt, sondern auf den Kanten zwischen erster und zweiter Kavität - quasi wie "auf Schienen" - aufliegt. Die durch den Rotationskörper übertragene Last wird also dadurch auf zwei Auflagepunkte verteilt. Beispielsweise befindet sich diese Schutz-Rinne im unteren Teil der Kavität des Stator und/oder im oberen Teil der Kavität des Rotors. Eine andere Konstellation der Rinne bzw. Rinnen oder mehrere Rinnen pro Kavität in verschiedenen Richtungen sind ebenso erfindungsgemäss.

Das erfindungsgemässe Vermessungsgerät wird nachfolgend anhand von in der Zeichnung schematisch dargestellten Ausführungsbeispielen rein beispielhaft näher beschrieben oder erläutert. Im Einzelnen zeigen
- Fig.1: die figürliche Darstellung eines Vermessungsgerätes;
- Fig.2a: die Darstellung eines Vermessungsgerätes in der Vorderansicht mit ausgeschnittenen Details der erfindungsgemässen Kugelpunktlagerungen, wobei eine Seite der Neigkomponente in einem V-Lager gelagert ist;
- Fig.2b: die Darstellung eines Vermessungsgerätes in der Vorderansicht mit ausgeschnittenen Details der erfindungsgemässen Kugelpunktlagerungen der Neigkomponente;
- Fig.3a-b: die schematischen Darstellungen zweier prinzipieller Ausführungsbeispiele einer Kugelpunktlagerung eines erfindungsgemässen Messgerätes;
- Fig.4a-f: die schematischen Darstellungen von sechs Ausführungsbeispielen einer Kugelpunktlagerung eines erfindungsgemässen Messgerätes;
- Fig.5a-c: die schematischen Darstellungen dreier Ausführungsbeispiele der Vorspannung einer erfindungsgemässen Kugelpunktlagerung
- Fig.6a-c: die schematischen Darstellungen des radialen und des axialen Schock-Schutzmechanismus, bereitgestellt durch die Kugelpunktlagerung;
- Fig.7a-b: die Darstellung der zusätzlichen Kavität im unteren Teil des feststehenden Lagersitzes in der Vorder- und geschnittenen Seitenansicht;
- Fig.8a-c: die Darstellung der zusätzlichen Kavität im unteren Teil des feststehenden Lagersitzes mit Rotationskörper im Normaleingriff in der Vorderansicht, geschnittenen Seitenansicht und geschnittenen Vorderansicht;
- Fig.9a-c: die Darstellung der zusätzlichen Kavität im unteren Teil des feststehenden Lagersitzes mit Rotationskörper im "ausgeklinkten" Zustand in der Vorderansicht, geschnittenen Seitenansicht und geschnittenen Vorderansicht;
- Fig.10a-c: die Darstellung der zusätzlichen Kavität im unteren Teil des feststehenden Lagersitzes mit Rotationskörper im "ausgeklinkten" Zustand in der Vorderansicht, geschnittenen Seitenansicht und geschnittenen Vorderansicht;
- Fig.11a-c: die Darstellung der zusätzlichen Kavität im unteren Teil des feststehenden Lagersitzes mit Rotationskörper im "ausgeklinkten" Zustand in der Vorderansicht, geschnittenen Seitenansicht und geschnittenen Vorderansicht;

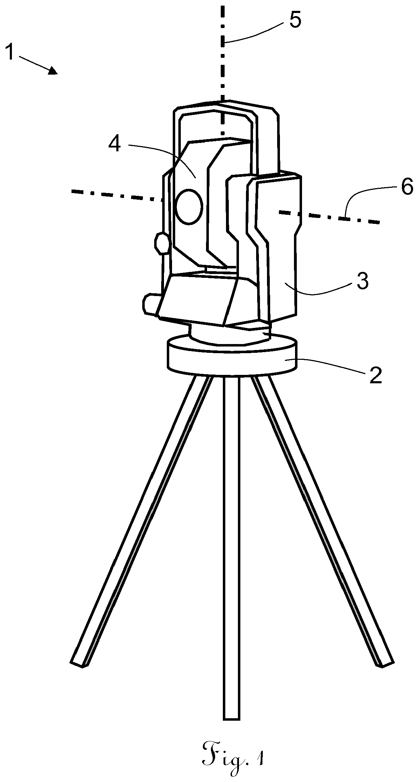

Figur 1 zeigt ein Vermessungsgerät 1 mit Basis 2, Gierkomponente 3 und Neigkomponente 4, wobei die Drehachse der Gierkomponente die Stehachse 5 ist und die Drehachse der Neigkomponente die Kippachse 6 ist.

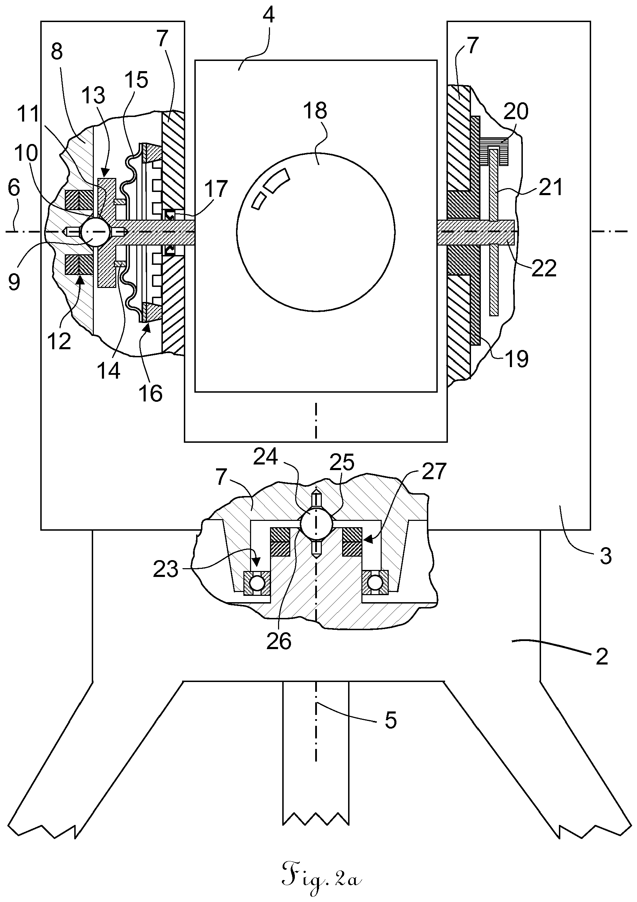

Figur 2a zeigt ein Vermessungsgerät 1 in der Seitenansicht mit Ausbrüchen an den Lagersitzen der Neigkomponente 4 und der Gierkomponente 3. An diesen Stellen sind die Lagerungskomponenten im Schnitt dargestellt.

Die ein optisches System 18 fassende Neigkomponente 4 weist eine Kippachse 6 auf, welche durch die erfindungsgemässe Lagerung der Welle 22 realisiert wird. An einem Ende besitzt die Welle 22 einen Flansch 13, welcher mittig mit einer rotationssymmetrischen konischen Kavität 11 (Kegelbohrung) versehen ist. Eine weitere konische Kavität 10 befindet sich im Seitendeckel 8, der ebenso wie der Korpus 7 zur Gierkomponente 3 zählt. Für die Beherbergung der Kavität 10 ist anstelle des Seitendeckels 8 ebenso eine separate, vom Aussengehäuse des Vermessungsgerätes unabhängige Tragstruktur im Inneren der Gierkomponente 3 realisierbar.

Wie dargestellt können die Kavitäten 10 und 11 hierbei eine Kernlochbohrung aufweisen, da dies ggf. fertigungstechnisch notwendig ist. Eingefasst in die Kavitäten 10 und 11 befindet sich ein Rotationskörper 9 in Form einer Kugel. Da die Kavitäten 10 und 11 und die Kugel 9 bezüglich der Kippachse 6 rotationssymmetrisch sind, wirkt sich das Einspannen der Kugel 9 selbstzentrierend aus. Die Kugel 9 hat im Eingriff mit beiden Kavitäten 10 und 11 einen ringförmigen Linienkontakt. Im gezeigten Beispiel erfolgt die Vorspannung - und damit das Einspannen der Kugel 9 - einerseits durch die den Flansch 13 anziehenden und in den Seitendeckel 8 eingelassenen Magneten 12. Andererseits drückt ein Federelement 15 den Flansch 13 über eine Hülse 14 gegen die Kugel 9. Dabei stützt sich das Federelement 15 an einem an dem Korpus 7 der Gierkomponente 3 aufliegenden Wanderwellenmotor 16 ab, welcher die Achse antreibt.

Dieser Wanderwellenmotor 16 ist über das Federelement 15 und die Hülse 14 starr mit dem Flansch 13 verbunden und treibt somit die Welle 22 an. Über eine vom piezokeramischen Spannungsring erzeugte Ultraschall-Anregung des gezahnten elastischen Metallrings wird eine wandernde Welle erzeugt, wodurch sich in Verbindung mit der Anpressung das rotatorische Antriebsmoment ergibt. Mit dem Wanderwellenmotor wird ein getriebeloser, Platz sparender und relativ einfacher Antrieb realisiert, wobei zusätzlich ein synergetischer Effekt in Verbindung mit der Kugelpunktlagerung durch die für beide Zwecke nutzbare Vorspannung eintritt.

Zum Schutz der Präzisionskomponenten dichtet eine flexible, also nicht lagernde Dichtung 17 die Welle 22 am Wellenaustritt gegenüber der Umwelt ab.

Die schwimmende Lagerung der anderen Seite der Welle 22 erfolgt über eine konventionelle V-Lagerung 19, welche im Korpus 7 montiert ist. Auch befindet sich ein Winkelmesssystem - bestehend aus Encoder 20 und Codescheibe 21 - an diesem Wellenende.

Anhand dieses erfindungsgemässen Prinzips ist in Figur 2a ebenfalls die Gierkomponente 3 auf der Basis 2 drehbar um die Stehachse 5 gelagert. Die Kugel 24 wird hierbei von zwei kegelförmigen Kavitäten 25 und 26 von oben und unten eingeklemmt, wobei die Kugel sich selbst und damit die Gierkomponente 3 und die Basis 2 zentriert. Ebenfalls werden in diesem Ausführungsbeispiel Magnete 27 benützt, um neben der Schwerkraft eine weitere Vorspannkraft bereitzustellen, welche die Gierkomponente 3 und die Basis 2 aneinander hält. Diese weitere Vorspannung ermöglicht auch einen Kopfüber-Betrieb.

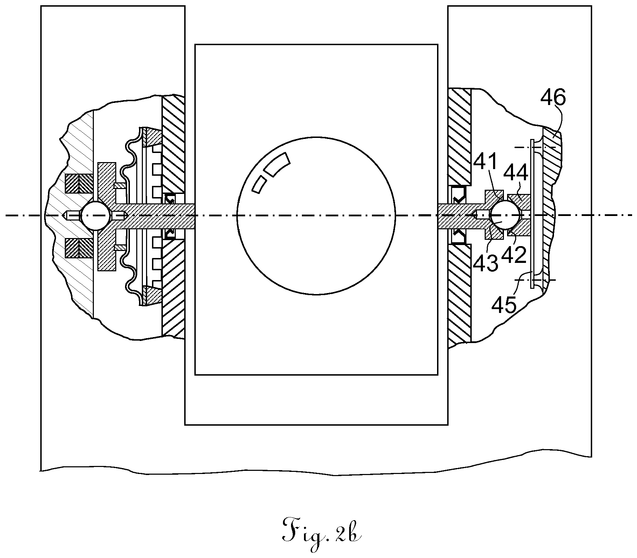

Wie in Figur 2b gezeigt, ist für diesen Kopfüber-Betrieb dann anstelle der schwimmenden Lagerung in 19 eine weitere Kugelpunktlagerung vorgesehen, verwirklicht durch die Kavitäten 41 und 42, zwischen denen die Kugel 43 eingespannt ist, wobei die Einspannung durch das Federblech 45 erfolgt, welches den Block 44 trägt und an der Halterung 46 verankert ist. In diesem Fall ist das Federelement also "aussen" angeordnet, wo es für die nötige Längenausdehnungskompensation sowie die notwendige Vorspannung sorgt. Der die Kavität 42 beinhaltende Block 44, das Federblech 45 und die Halterung 46 gelten als zur Gierkomponente 3 gehörig.

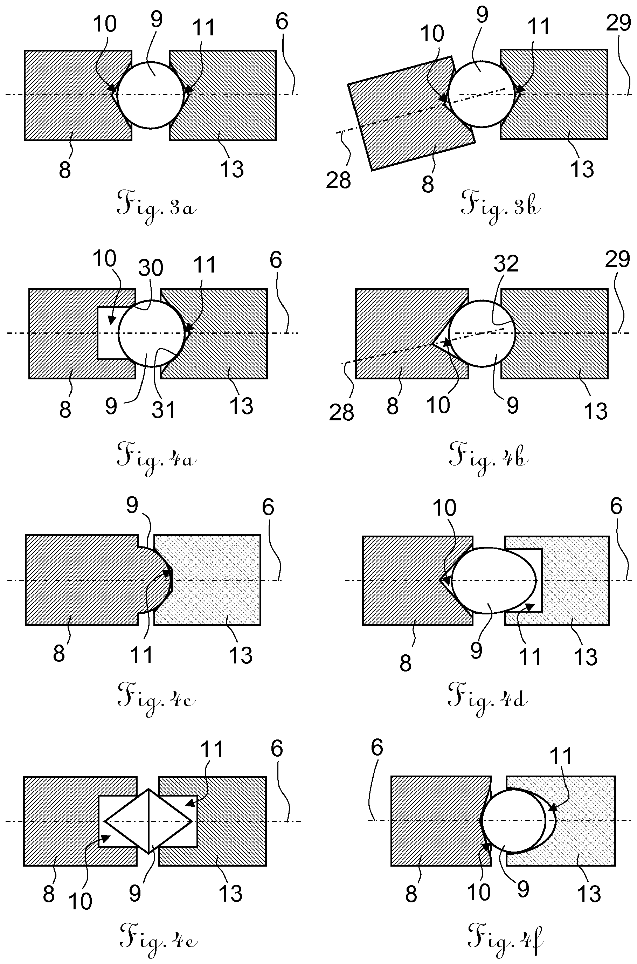

Figuren 3a und 3b zeigen den Seitendeckel 8 (Stator), den Flansch 13 der Welle 22 (Rotor) und den Rotationskörper 9, der in den dargestellten Beispielen eine Kugel ist.

Die Kavitäten 10 und 11 in Figur 3a sind rotationssymmetrische und zueinander koaxiale Kegelbohrungen, wodurch die Kugel beidseitig ringförmige Linienauflagen in den Kavitäten hat und diese Kontaktringe parallel zueinander sind, sodass die eingespannte Kugel bewirkt, dass Rotor und Stator koaxial angeordnet sind.

Figur 3b zeigt den Fall, dass die Mittelachsen 28 und 29 der Kugel 9, die orthogonal durch die Ebenen verlaufen, die jeweils durch die Kontaktpunkte bzw. den Kontaktring zwischen der Kugel und der jeweiligen Kavität aufgespannt wird, nicht fluchten, sondern einander im Kugelzentrum kreuzen. Dies ermöglicht, das Statorlager noch besser auf die Hauptbelastungsrichtung (stehendes Gerät) auszulegen. Die Mittelachse 29 entspricht der Kippachse 6 des Rotors.

Figuren 4a bis 4f zeigen Ausführungsformen der Kavitäten bzw. Rotationskörper.

Figur 4a zeigt Kavität 10 als eine Zylinderbohrung, die durch ein Eindrücken der Kugel 9 einen teilweise ebenbildlichen Abdruck 30 aufweist. Ebenso die als Kegelbohrung ausgeführte Kavität 11 weist einen Abdruck 31 der Kugel auf. Durch die Abdrücke 30 und 31 hat die Kugel 9 nicht mehr nur einen linienförmigen, sondern einen flächigen, umfänglichen Kontakt mit den Kavitäten, was die Tragfähigkeit des Lagers erhöht. Kavität 10 und Kavität 11 teilen sich eine Symmetrieachse, die Kippachse 6.

Figur 4b zeigt ein weiteres Beispiel für sich kreuzende Mittelachsen 28 und 29, wobei die Mittelachse 29 der Kippachse 6 entspricht. Dass die Achsen nicht koaxial zu einander stehen ist bedingt durch eine asymmetrische Kegelbohrung 10, welche für eine schräge Auflage der Kugel 9 verantwortlich ist. Diese schräge Auflage kann beispielsweise einer auf den Flansch 13 von oben wirkenden radialen Überlast entgegenwirken. Im Flansch 13 hat die Kugel einen geklebten, gelöteten oder geschweissten Sitz 32 und ist damit fixiert. Ein rotatives Abgleiten findet somit nur in der Kavität 10 statt.

Figur 4c zeigt eine Halbkugel 9 als Rotationskörper, die in den Seitendeckel 8 eingearbeitet wurde, z.B. durch spanende Fertigung oder Schmieden. Ein rotatives Abgleiten findet somit nur in der Kavität 11 statt, welche beispielhaft als kegelstumpfförmige Senkbohrung ausgeführt ist.

Figur 4d zeigt einen Ovoid 9 als Rotationskörper, welcher an seinem stumpferen Ende in einer Kegelbohrung 10 und an seinem spitzeren Ende in einer Zylinderbohrung 11 eingelassen ist. Der Ovoid zentriert sich selbst in den beiden Kavitäten und hat mit beiden einen ringförmigen Kontakt.

Figur 4e zeigt als weiteres Ausführungsbeispiel der Erfindung einen in zwei Zylinderbohrungen 10 und 11 eingelassenen Doppelkegel, der darin durch eine entsprechende Vorspannung ebenfalls selbstzentrierend und stabil gehalten wird. Ebenso kann der Rotationskörper 9 über zumindest drei punkt- und/oder linienförmige Auflagekontakte mit den Kavitäten 10 und 11 verfügen, sofern diese nicht rotationssymmetrisch sind, sondern beispielsweise ein vieleckiges Profil haben (z.B. Innensechskant).

Figur 4f zeigt ein letztes Beispiel für die Ausgestaltung der Kavitäten 10 und 11 sowie des Rotationskörpers 9. Gezeigt ist eine kegelförmige Senkung 10 als Kavität im Seitendeckel 8 und eine ellipsoide Kalotte 11 als Kavität im Flansch 13 des Rotors. Eine Kugel 9 hat einen selbstzentrierenden Eingriff in beide genannten Kavitäten. Durch die moderate Verjüngung der Kalotte 11 kann ein Festklemmen der Kugel 9 bewirkt werden, wodurch die Kugel 9 nur in der Senkung 10 rotatorisch abgleiten würde.

Für die Figuren 3a und 3b und 4a bis 4f gilt, dass Seitendeckel 8 und Flansch 13 bzw. Kavität 10 im Stator und Kavität 11 im Rotor alternativ jeweils andersherum gekennzeichnet werden können, da auch die dementsprechend umgekehrte Anordnung anwendbar ist. Ebenso können die Gestaltungsformen der in diesen Figuren gezeigten Kavitäten, insbesondere auch mit der des Rotationskörpers 9, ggf. beliebig miteinander kombiniert werden.

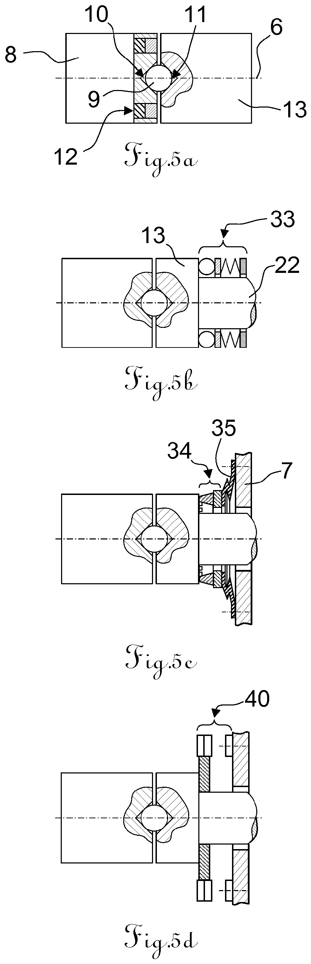

Die Figuren 5a bis 5c zeigen ausschnittweise Prinzipskizzen möglicher Ausführungsbeispiele für die Vorspannung der Kugelpunktlagerung.

Figur 5a zeigt die Vorspannung durch Magnetkraft. Dazu ist ein Magnet 12, welcher auch als Elektromagnet ausgeführt sein kann, z.B. im Seitendeckel 8 eingelassen. Ebenso kann der Magnet entsprechend im gegenüber liegenden Flansch 13 der Welle 22 positioniert werden. Der Magnet 12 ist z.B. zumindest teilweise ringförmig aufgebaut und umringt bzw. umgibt die Kavität 10 oder 11. Der Magnet zieht entweder das Material des gegenüberliegenden Elementes selbst an, oder - falls z.B. dieses Gegenelement nicht ferromagnetisch ist - ein eigens hierfür in das jeweilige Gegenelement eingelassenes und mit ihm verbundenes ferromagnetisches Bauteil.

Figur 5b zeigt schemenhaft eine für die Einspannung der Kugel 9 zwischen den Kavitäten 10 und 11 benützte Axialfederkomponente 33, welche aus einem Axialwälzlager und zwischen zwei Unterlegscheiben eingebetteten und umfänglich verteilten Spiralfedern besteht. Die Axialfederkomponente 33 stützt sich z.B. am Korpus 7 der Gierkomponente (nicht dargestellt) ab und bewirkt somit eine Vorspannkraft. Zur Rotation der Welle 22 ermöglicht das Axialwälzlager der Axialfederkomponente 33 ein Abrollen am Flansch 13.

Figur 5c zeigt die Vorspannung einer Kugelpunktlagerung unter Zuhilfenahme eines für einen Wanderwellenmotor 34 benötigten Federelementes, namentlich eines Federbalgs 35. Dieser piezoelektrische Wanderwellenmotor 34 selbst benötigt zur Bewegungsübertragung einen Anpressdruck, der durch den Federbalg 35 realisiert wird. Dadurch wird nicht nur der Motor 34 an den Flansch 13 angedrückt, sondern auch - durch das Abstützen am Korpus 7 - Flansch 13 über Kugel 9 an Seitendeckel 8.

Figur 5d zeigt eine weitere Alternative der dynamischen Lagerverpressung durch eine axiale Fluss Maschine 40. Die Bewegung erzeugenden Elemente (Magnete am Rotor und Kupferspulen am Stator) stossen sich hierbei magnetisch ab und generieren dadurch die Vorspannung, sozusagen als Nebeneffekt zum Vortrieb.

Die in den Figuren 5a bis 5d rein beispielhaft gezeigten Vorspannmöglichkeiten sind ebenso auf die vertikale Kugelpunktlagerung, also auf den zwischen den Kavitäten 25 und 26 eingespannten Rotationskörper 24, übertragbar.

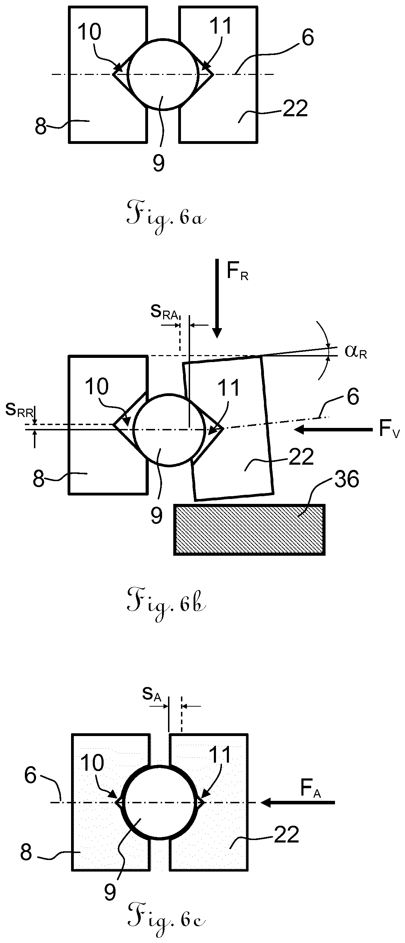

Die Figuren 6a bis 6c verdeutlichen den Schockschutz-Mechanismus bei radialer und axialer Belastung.

Figur 6a zeigt lediglich die Ausgangsreferenz bezüglich der in den Figuren 6b und 6c gezeigten radialen und axialen Versätze. In diesem in Figur 6a gezeigten "Normalzustand" liegt die Kugel 9 in beiden Kavitäten 10 und 11 zentriert auf, wodurch die Lagerung der Welle 22 zur Rotation um die Kippachse 6 realisiert wird.

Würde eine radiale Schockkraft F_{R} die Tragfähigkeit des Lagerwerkstoffes übersteigen, so kann die axiale Vorspannkraft F_{V} so dimensioniert werden, dass diese Schockkraft F_{R} zum "Ausklinken" des Lagers führt. Dies schützt das Lager vor Überlastung bei Erschütterungen. Eine solche Ausklinksituation zeigt Figur 6b. Die Kugel 9 verlässt ihren stabilen Lagersitz in Kavität 10 und 11. Infolgedessen erfährt die Welle 22 eine Verkippung um das Auflager 19, die sich am Kugelpunktlager durch den Winkel α_{R}, den Axialversatz s_{RA} und den Radialversatz s_{RR} zum Ausdruck bringt. Die Kippachse 6 gerät dadurch entsprechend dem Winkel α_{R} in Schieflage. Ein radialer Anschlag 36 begrenzt die Ausklingdistanz allerdings gerade so, dass die Kugel 9 stets zwischen den Kavitäten 10 und 11 gehalten wird und nicht herausfallen kann.

Tritt gemäss Figur 6c ein Schock F_{A} in Axialrichtung auf, so führt er aufgrund der Härteunterschiede der Materialien zum Eindrücken der Kugel 9 in die Kavität 10 bzw. 11. Die Rundlaufeigenschaften werden dadurch nicht beeinträchtigt, da es dabei zu einem formgenauen Abbild der härteren Kugel 9 in der weicheren Kegelbohrung 10 bzw. 11 kommt. Der dadurch erzeugte Axialversatz s_{A} wird über die restliche Vorspannung kompensiert.

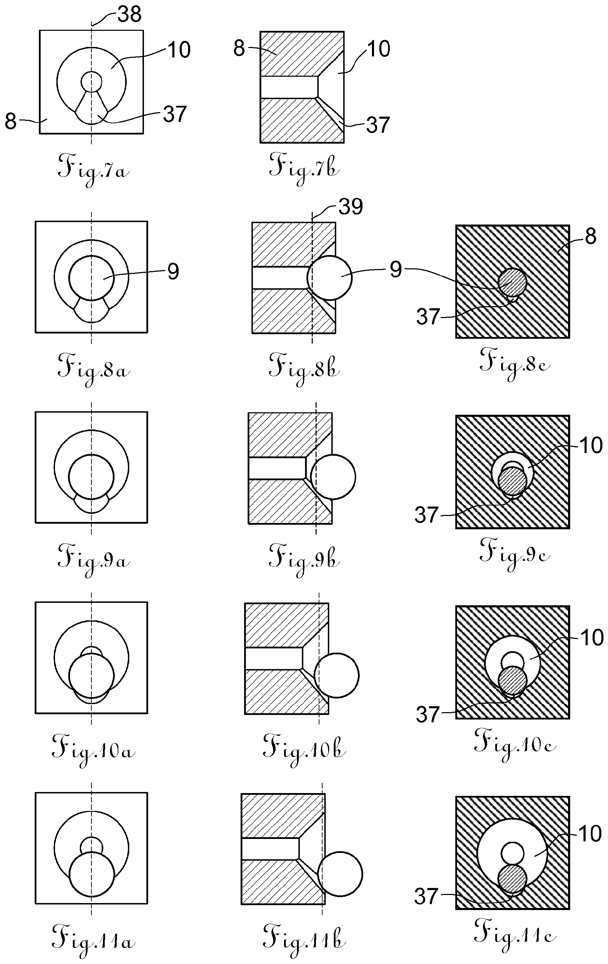

In den Figuren 7a bis 11c ist der in Figur 6b dargestellte Ausklinkvorgang - einseitig am Stator 8 - nochmals verdeutlicht, wobei zusätzlich die Senkbohrung 10 mit einer Führungsrinne 37 ausgestattet ist.

Die mit a indizierten Figuren 7 bis 11 zeigen den Ausschnitt des Seitendeckels 8 in der Aufsicht mit der Kegelbohrung 10 und der unten eingesenkten Rinne 37. Die mit a indizierten Figuren 8 bis 11 zeigen zusätzlich noch den Rotationskörper 9, der in den Figuren 8a-c im "Normalzustand" komplett aufliegt und damit einen linienförmigen Kontakt mit der Kegelbohrung 10 aufweist. In Figur 9a hat die Kugel 9 ihren normalen Sitz verlassen, liegt nunmehr in der Rinne 37 auf und hat damit also einen Zwei-Punkt-Kontakt mit der Mantelfläche der Kegelbohrung 10. Wie die Figuren 9a, 10a und 11a kumulativ verdeutlichen, läuft die Kugel die Rinne 37 quasi wie "auf Schienen" immer weiter ab.

In den mit a indizierten Figuren 7 bis 11 ist zudem jeweils die Schnittebene 38 gestrichelt markiert, die in den mit b indizierten Figuren 7 bis 11 gezeigt ist.

Die Figuren 7b, 8b, 9b, 10b und 11b zeigen somit also einen mittigen Schnitt der in den Figuren 7a, 8a, 9a, 10a und 11a dargestellten Objekte. Zu sehen sind ein Ausschnitt des Seitendeckels 8, die Rinne 37 und die Kegelbohrung 10 in der Seitenansicht. Die mit b indizierten Figuren 8 bis 11 zeigen zusätzlich noch den Rotationskörper 9, der in Figur 8b im "Normalzustand" komplett aufliegt und damit einen linienförmigen Kontakt mit der Kegelbohrung 10 aufweist. In Figur 9b hat die Kugel 9 ihren normalen Sitz verlassen, liegt nunmehr in der Rinne 37 auf und hat damit also einen Zwei-Punkt-Kontakt mit der Mantelfläche der Kegelbohrung 10. Wie die Figuren 9b, 10b und 11b kumulativ verdeutlichen, läuft die Kugel die Rinne 37 quasi wie "auf Schienen" immer weiter ab.

In den mit b indizierten Figuren 8 bis 11 ist zudem jeweils die Schnittebene 39 gestrichelt markiert, die in den mit c indizierten Figuren 8 bis 11 gezeigt ist.

Die Figuren 8c, 9c, 10c und 11c zeigen somit also einen senkrechten Schnitt durch die Ebene des jeweiligen Kugelauflagekontakts aus den Figuren 8b, 9b, 10b und 11b. Im Schnitt zu sehen sind ein Ausschnitt des Seitendeckels 8, die Rinne 37 und die Kugel 9 in der Aufsicht. Die mit c indizierten Figuren 9 bis 11 zeigen zusätzlich noch die Kegelbohrung 10, die aufgrund des bereits erwähnten Ausklinkvorgangs im Schnitt nun sichtbar wird. Figur 8c zeigt den "Normalzustand", in welchem die Kugel 9 in der Kegelbohrung 10 aufliegt, damit einen linienförmigen Kontakt mit der Kegelbohrung 10 aufweist und deshalb die Kegelbohrung 10 gänzlich verdeckt. In Figur 9c hat die Kugel 9 ihren normalen Sitz verlassen, liegt nunmehr in der Rinne 37 auf und hat damit also einen Zwei-Punkt-Kontakt mit der Mantelfläche der Kegelbohrung 10. Wie die Figuren 10c und 11c kumulativ verdeutlichen, läuft die Kugel die Rinne 37 quasi wie "auf Schienen" immer weiter ab.

Es versteht sich für den Fachmann, dass die verschiedenen Mittel zur Modifizierung des optischen Strahlgangs miteinander in alternativer oder ergänzender Weise kombiniert werden können. Auch können die Kugelpunktlager an anderen als den dargestellten Stellen des Vermessungsgerätes angeordnet werden.

## Patentansprüche

1. Vermessungsgerät (1), insbesondere Totalstation, Tracker oder Scanner, mit wenigstens
• einem optischen Messstrahlgang,
• einer Basis (2) zur Positionierung des Vermessungsgerätes,
• einer auf der Basis um eine Stehachse (5) drehbar gelagerten Gierkomponente (3) zur azimuthalen Ausrichtung des optischen Strahlgangs und
• einer in der Gierkomponente um eine Kippachse (6) drehbar gelagerten Neigkomponente (4) zur elevativen Ausrichtung des optischen Strahlgangs,
**dadurch gekennzeichnet, dass**
ein Rotationskörper (9), insbesondere eine Kugel, zwischen
• einer Kavität (10) in der Gierkomponente und
• einer Kavität (11) an einem Ende der Neigkomponentenwelle (22)
selbstzentrierend eingespannt ist, sodass anhand des in den Kavitäten eingespannten Rotationskörpers die Neigkomponente an besagtem Ende sowohl radial als auch axial in der Gierkomponente drehbar gleitgelagert ist.

2. Vermessungsgerät (1) nach Anspruch 1,
**dadurch gekennzeichnet, dass**
das andere Ende der Neigkomponentenwelle (22) gelagert ist
• durch ein radiales Loslager (19), insbesondere eine konventionelle V-Lagerung, oder,
insbesondere zum Kopfüberbetrieb,
• durch einen Rotationskörper (43), insbesondere eine Kugel, die zwischen
o einer Kavität (42) in der Gierkomponente und
o einer Kavität (41) an einem Ende der Neigkomponentenwelle (22)
selbstzentrierend eingespannt ist.

3. Vermessungsgerät (1) nach einem der Ansprüche 1 bis 2,
**dadurch gekennzeichnet, dass**
die Kavität (10, 42) in der Gierkomponente (3) mindestens eine Rinne (37) aufweist.

4. Vermessungsgerät (1), insbesondere Totalstation, Tracker oder Scanner, mit wenigstens
• einem optischen Messstrahlgang,
• einer Basis (2) zur Positionierung des Vermessungsgerätes,
• einer auf der Basis um eine Stehachse (5) drehbar gelagerten Gierkomponente (3) zur azimuthalen Ausrichtung des optischen Strahlgangs und
• einer in der Gierkomponente um eine Kippachse (6) drehbar gelagerten Neigkomponente (4) zur elevativen Ausrichtung des optischen Strahlgangs,
**dadurch gekennzeichnet, dass**
ein Rotationskörper (24), insbesondere eine Kugel, zwischen
• einer Kavität (26) in der Basis und
• einer Kavität (25) in der Gierkomponente selbstzentrierend eingespannt ist, sodass anhand des in den Kavitäten eingespannten Rotationskörpers die Gierkomponente sowohl radial als auch axial auf der Basis drehbar gleitgelagert ist.

5. Vermessungsgerät (1) nach einem der Ansprüche 1 bis 3 und/oder Anspruch 4,
**dadurch gekennzeichnet, dass**
mindestens eine Kavität (10, 11, 25, 26, 41, 42) über eine sich aufweitende Mantelfläche verfügt, entlang derer der Rotationskörper (9, 24, 43) bei Überlastung seinen zentrierten Sitz verlassend abgleitet und bei Entlastung wieder in seinen zentrierten Sitz hineingleitet.

6. Vermessungsgerät (1) nach einem der Ansprüche 1 bis 3 und/oder nach einem der Ansprüche 4 bis 5,
**dadurch gekennzeichnet, dass**
der Rotationskörper (9, 24) durch mindestens drei Kontaktpunkte, insbesondere zumindest teilweise linienförmig oder flächig in den Kavitäten (10, 11; 25, 26; 41, 42) aufliegt.

7. Vermessungsgerät (1) nach einem der Ansprüche 1 bis 3 und/oder nach einem der Ansprüche 4 bis 6,
**dadurch gekennzeichnet, dass**
die Kavitäten (10, 11; 25, 26; 41, 42) einander entgegengesetzte Kegelbohrungen sind, wobei die Kegelverjüngungen von einander wegzeigen.

8. Vermessungsgerät (1) nach einem der Ansprüche 1 bis 3 und/oder nach einem der Ansprüche 4 bis 7,
**dadurch gekennzeichnet, dass**
der Rotationskörper (9, 24, 43) mittels mindestens eines Magneten (12, 27) und/oder mittels mindestens einer mechanischen Feder (15, 45) eingespannt ist.

9. Vermessungsgerät (1) nach einem der Ansprüche 1 bis 3 und/oder nach einem der Ansprüche 4 bis 8,
**dadurch gekennzeichnet, dass**
als Kavität (10, 11; 25, 26; 41, 42) diejenige Zentrierbohrung genutzt wird, welche für die Bearbeitung des entsprechenden Bauteils (2, 7, 8, 22, 44) auf einer Dreh- und/oder Schleifmaschine ohnehin benötigt wird.

10. Vermessungsgerät (1) nach einem der Ansprüche 1 bis 3 und/oder nach einem der Ansprüche 4 bis 9,
**dadurch gekennzeichnet, dass**
der Rotationskörper (9, 24, 43) fest mit einer der beiden Kavitäten (10, 11; 25, 26; 41, 42) verbunden, insbesondere Bestandteil der Gierkomponente (3), der Neigkomponentenwelle (22) oder der Basis (2) ist.

11. Vermessungsgerät (1) nach einem der Ansprüche 1 bis 3 und/oder nach einem der Ansprüche 4 bis 10,
**dadurch gekennzeichnet, dass**
der Rotor (13, 7) durch einen Wanderwellenmotor (16) antreibbar ist, wobei die Vorspannung des durch den Rotationskörper (9, 24, 43) gebildeten Axial-Radial-Lagers über das für den Wanderwellenmotor benötigte Vorspannelement (15, 45) erfolgt.

12. Vermessungsgerät (1) nach einem der Ansprüche 1 bis 3 und/oder nach einem der Ansprüche 4 bis 11,
**dadurch gekennzeichnet, dass**
der Rotor (13, 7) durch einen Axialflussmotor (40) antreibbar ist, wobei die Vorspannung des Rotationskörpers (9, 24, 43) über die vom Axialflussmotor erzeugte magnetische Axialkraft erfolgt.

13. Vermessungsgerät (1) nach einem der Ansprüche 1 bis 3 und/oder nach einem der Ansprüche 4 bis 12,
**dadurch gekennzeichnet, dass**
• der Rotationskörper (9, 24, 43) keramischen oder hartmetallischen Materials ist und
• der Härtegrad des Materials der Kavitäten (10, 11, 25, 26, 41, 42) geringer ist, als der Härtegrad des Rotationskörpermaterials.

14. Herstellungsverfahren für Vermessungsgerät (1) nach einem der Ansprüche 1 bis 13,
**dadurch gekennzeichnet, dass**
als Kavität (10, 11; 25, 26; 41, 42) diejenige Zentrierbohrung genutzt wird, welche für die Bearbeitung des entsprechenden Bauteils (2, 7, 8, 22, 44) auf einer Dreh- und/oder Schleifmaschine ohnehin benötigt wird.

15. Vermessungsgerät (1), insbesondere Totalstation, Tracker oder Scanner, mit wenigstens
• einem optischen Messstrahlgang,
• einer Basis (2) zur Positionierung des Vermessungsgerätes,
• einer auf der Basis um eine Stehachse (5) drehbar gelagerten Gierkomponente (3) zur azimuthalen Ausrichtung des optischen Strahlgangs und
• einer in der Gierkomponente um eine Kippachse (6) drehbar gelagerten Neigkomponente (4) zur elevativen Ausrichtung des optischen Strahlgangs,
**dadurch gekennzeichnet, dass**
ein Rotationskörper (9, 43), insbesondere eine Halbkugel oder ein Halbovoid, als Lager für
• die Neigkomponente (4) gegenüber
• der Gierkomponente (3)
selbstzentrierend in einer Kavität (10, 11; 41, 42), die an Bauteilen (8, 44) der Gierkomponente oder an einem Ende der Neigkomponentenwelle (22) vorgesehen ist, eingespannt ist, sodass anhand des in der Kavität eingespannten Rotationskörpers die Neigkomponente sowohl radial als auch axial in der Gierkomponente drehbar gleitgelagert ist, wobei der Rotationskörper fest mit der Neigkomponentenwelle bzw. der Gierkomponente verbunden ist, insbesondere Bestandteil der Neigkomponentenwelle bzw. der Gierkomponente ist.

16. Vermessungsgerät (1), insbesondere Totalstation, Tracker oder Scanner, mit wenigstens
• einem optischen Messstrahlgang,
• einer Basis (2) zur Positionierung des Vermessungsgerätes,
• einer auf der Basis um eine Stehachse (5) drehbar gelagerten Gierkomponente (3) zur azimuthalen Ausrichtung des optischen Strahlgangs und
• einer in der Gierkomponente um eine Kippachse (6) drehbar gelagerten Neigkomponente (4) zur elevativen Ausrichtung des optischen Strahlgangs,
**dadurch gekennzeichnet, dass**
ein Rotationskörper (24), insbesondere eine Halbkugel oder ein Halbovoid, als Lager für
• die Gierkomponente (3) gegenüber
• der Basis (2) selbstzentrierend in einer Kavität (25, 26), die in der Basis oder der Gierkomponente vorgesehen ist, eingespannt ist, sodass anhand des in der Kavität eingespannten Rotationskörpers die Gierkomponente drehbar gegenüber der Basis sowohl radial als auch axial gleitgelagert ist, wobei der Rotationskörper fest mit der Gierkomponente bzw. der Basis verbunden ist, insbesondere Bestandteil der Gierkomponente bzw. der Basis ist.

## Claims

1. Surveying device (1), in particular total station, tracker, or scanner, having at least
- an optical measuring beam path,
- a base (2) for positioning the surveying device,
- a yaw component (3) for azimuthally aligning the optical beam path, said yaw component being rotatably mounted on the base about a standing axis (5), and
- a pitch component (4) for elevatively aligning the optical beam path, said pitch component being rotatably mounted in the yaw component about a tilt axis (6),
**characterized in that** a solid of revolution (9), in particular a ball, is chucked in a self-centering manner between
- a cavity (10) in the yaw component and
- a cavity (11) at one end of the pitch component shaft (22),
so that with means of the solid of revolution being chucked in the cavities, the pitch component is at said end rotatably slide-mounted in the yaw component both radially and axially.

2. Surveying device (1) according to Claim 1, **characterized in that** the other end of the pitch component shaft (22) is mounted
- by a radial free bearing (19), in particular a conventional V-bearing, or,
in particular for upside-down operation,
- by a solid of revolution (43), in particular a ball, which is chucked in a self-centering manner between
- a cavity (42) in the yaw component and
- a cavity (41) at one end of the pitch component shaft (22).

3. Surveying device (1) according to any one of Claims 1 to 2,
**characterized in that** the cavity (10, 42) in the yaw component (3) has at least one channel (37).

4. Surveying device (1), in particular total station, tracker, or scanner, having at least
- an optical measuring beam path,
- a base (2) for positioning the surveying device,
- a yaw component (3) for azimuthally aligning the optical beam path, said yaw component being rotatably mounted on the base about a standing axis (5), and
- a pitch component (4) for elevatively aligning the optical beam path, said pitch component being rotatably mounted in the yaw component about a tilt axis (6),
**characterized in that** a solid of revolution (24), in particular a ball, is chucked in a self-centering manner between
- a cavity (26) in the base and
- a cavity (25) in the yaw component,
so that with means of the solid of revolution being chucked in the cavities, the yaw component is rotatably slide-mounted on the base both radially and axially.

5. Surveying device (1) according to any one of Claims 1 to 3 and/or Claim 4,
**characterized in that** at least one cavity (10, 11, 25, 26, 41, 42) has a widening lateral surface, along which the solid of revolution (9, 24, 43) slides, while leaving its centering seat, in the event of overload, and slides back into its centering seat in the event of relief.

6. Surveying device (1) according to any one of Claims 1 to 3 and/or according to any one of Claims 4 to 5,
**characterized in that** the solid of revolution (9, 24) rests by way of at least three contact points, in particular at least partially in a linear or planar manner, in the cavities (10, 11; 25, 26; 41, 42).

7. Surveying device (1) according to any one of Claims 1 to 3 and/or according to any one of Claims 4 to 6,
**characterized in that** the cavities (10, 11; 25, 26; 41, 42) are conical boreholes opposite to one another, wherein the conical tapers point away from one another.

8. Surveying device (1) according to any one of Claims 1 to 3 and/or according to any one of Claims 4 to 7,
**characterized in that** the solid of revolution (9, 24, 43) is chucked by means of at least one magnet (12, 27) and/or by means of at least one mechanical spring (15, 45).

9. Surveying device (1) according to any one of Claims 1 to 3 and/or according to any one of Claims 4 to 8,
**characterized in that** the centering borehole, which would be required in any case for the machining of the corresponding component (2, 7, 8, 22, 44) on a turning and/or grinding machine, is used as the cavity (10, 11; 25, 26; 41, 42).

10. Surveying device (1) according to any one of Claims 1 to 3 and/or according to any one of Claims 4 to 9,
**characterized in that** the solid of revolution (9, 24, 43) is fixedly connected to one of the two cavities (10, 11; 25, 26; 41, 42), in particular is a component of the yaw component (3), the pitch component shaft (22), or the base (2).

11. Surveying device (1) according to any one of Claims 1 to 3 and/or according to any one of Claims 4 to 10,
**characterized in that** the rotor (13, 7) is drivable by a traveling wave motor (16), wherein the pre-clamping of the axial-radial bearing formed by the solid of revolution (9, 24, 43) is produced via the pre-clamping element (15, 45) required for the traveling wave motor.

12. Surveying device (1) according to any one of Claims 1 to 3 and/or according to any one of Claims 4 to 11,
**characterized in that** the rotor (13, 7) is drivable by an axial flux motor (40), wherein the pre-clamping of the solid of revolution (9, 24, 43) is produced via the magnetic axial force generated by the axial flux motor.

13. Surveying device (1) according to any one of Claims 1 to 3 and/or according to any one of Claims 4 to 12,
**characterized in that**
- the solid of revolution (9, 24, 43) is of ceramic or hard metal material and
- the degree of hardness of the material of the cavities (10, 11, 25, 26, 41, 42) is less than the degree of hardness of the solid of revolution material.

14. Production method for surveying device (1) according to any one of Claims 1 to 13,
**characterized in that** the centering borehole, which would be required in any case for the machining of the corresponding component (2, 7, 8, 22, 44) on a turning and/or grinding machine, is used as the cavity (10, 11; 25, 26; 41, 42).

15. Surveying device (1), in particular total station, tracker, or scanner, having at least
- an optical measuring beam path,
- a base (2) for positioning the surveying device,
- a yaw component (3) for azimuthally aligning the optical beam path, said yaw component being rotatably mounted on the base about a standing axis (5), and
- a pitch component (4) for elevatively aligning the optical beam path, said pitch component being rotatably mounted in the yaw component about a tilt axis (6),
**characterized in that** a solid of revolution (9, 43), in particular a hemisphere or a half ovoid, is chucked in a self-centering manner in a cavity (10, 11; 41, 42), which is provided on components (8, 44) of the yaw component or at one end of the pitch component shaft (22), as a bearing for
- the pitch component (4) in relation to
- the yaw component (3),
so that with means of the solid of revolution being chucked in the cavity, the pitch component is rotatably slide-mounted in the yaw component both radially and axially, wherein the solid of revolution is fixedly connected to the pitch component shaft or the yaw component, in particular is a component of the pitch component shaft or the yaw component.

16. Surveying device (1), in particular total station, tracker, or scanner, having at least
- an optical measuring beam path,
- a base (2) for positioning the surveying device,
- a yaw component (3) for azimuthally aligning the optical beam path, said yaw component being rotatably mounted on the base about a standing axis (5), , and
- a pitch component (4) for elevatively aligning the optical beam path, said pitch component being rotatably mounted in the yaw component about a tilt axis (6),
**characterized in that** a solid of revolution (24), in particular a hemisphere or a half ovoid, is chucked in a self-centering manner in a cavity (25, 26), which is provided in the base or the yaw component, as a bearing for
- the yaw component (3) in relation to
- the base (2),
so that with means of the solid of revolution being chucked in the cavity, the yaw component is rotatably slide-mounted in relation to the base both radially and axially, wherein the solid of revolution is fixedly connected to the yaw component or the base, in particular is a component of the yaw component or the base.

## Revendications

1. Dispositif d'arpentage (1), en particulier station totale, traceur ou scanner, avec au moins
• une trajectoire de faisceau de mesure optique,
• une base (2) pour le positionnement de l'appareil d'arpentage,
• une composante de lacet (3) positionnée sur la base en étant rotative autour d'un axe vertical (5) pour l'orientation azimutale de la trajectoire de faisceau optique et
• une composante d'inclinaison (4) positionnée dans la composante de lacet en étant rotative autour d'un axe de basculement (6) pour l'orientation en élévation de la trajectoire de faisceau optique,
**caractérisé en ce qu'**un corps de rotation (9), en particulier une bille, est coincé de manière autocentrée entre
• une cavité (10) dans la composante de lacet et
• une cavité (11) à une extrémité de l'onde de la composante d'inclinaison (22) si bien que la composante d'inclinaison est positionnée sur palier lisse en étant rotative à ladite extrémité aussi bien dans le sens radial qu'axial à l'aide du corps de rotation coincé dans les cavités.

2. Dispositif d'arpentage (1) selon la revendication 1, **caractérisé en ce que** l'autre extrémité de l'onde de la composante d'inclinaison (22) est positionnée
• par un palier libre radial (19), en particulier par un palier en V conventionnel, ou en particulier pour le fonctionnement tête en bas,
• par un corps de rotation (43), en particulier une bille, qui est coincé de manière autocentrée entre
∘ une cavité (10) dans la composante de lacet et
∘ une cavité (11) à une extrémité de l'onde de composante d'inclinaison (22).

3. Dispositif d'arpentage (1) selon l'une des revendications 1 à 2, **caractérisé en ce que** la cavité (10, 42) dans la composante de lacet (3) présente au moins une goulotte (37).

4. Dispositif d'arpentage (1), en particulier station totale, traceur ou scanner, avec au moins
• une trajectoire de faisceau de mesure optique,
• une base (2) pour le positionnement de l'appareil d'arpentage,
• une composante de lacet (3) positionnée sur la base en étant rotative autour d'un axe vertical (5) pour l'orientation azimutale de la trajectoire de faisceau optique et
• une composante d'inclinaison (4) positionnée dans la composante de lacet en étant rotative autour d'un axe de basculement (6) pour l'orientation en élévation de la trajectoire de faisceau optique,
**caractérisé en ce qu'**un corps de rotation (24), en particulier une bille, est coincé de manière autocentrée entre
• une cavité (26) dans la base et
• une cavité (25) dans la composante de lacet
si bien que la composante de lacet est positionnée sur palier lisse en étant rotative sur la base aussi bien dans le sens radial qu'axial à l'aide du corps de rotation coincé dans les cavités.

5. Dispositif d'arpentage (1) selon l'une des revendications 1 à 3 et/ou selon la revendication 4,
**caractérisé en ce qu'**au moins une cavité (10, 11, 25, 26, 41, 42) dispose d'une surface d'enveloppe qui s'élargit le long de laquelle le corps de rotation (9, 24, 43), en cas de surcharge, glisse en quittant son siège centré et, en cas de délestage, rentre à nouveau dans son siège centré en glissant.

6. Dispositif d'arpentage (1) selon l'une des revendications 1 à 3 et/ou selon l'une des revendications 4 à 5,
**caractérisé en ce que** le corps de rotation (9, 24) repose dans les cavités (10, 11 ; 25, 26 ; 41, 42) par au moins trois points de contact, en particulier au moins partiellement en forme de ligne ou sur toute la surface.

7. Dispositif d'arpentage (1) selon l'une des revendications 1 à 3 et/ou selon l'une des revendications 4 à 6,
**caractérisé en ce que** les cavités (10, 11 ; 25, 26 ; 41, 42) sont des perçages coniques opposés l'un à l'autre, cependant que les rétrécissements sont dirigés à l'opposé l'un de l'autre.

8. Dispositif d'arpentage (1) selon l'une des revendications 1 à 3 et/ou selon l'une des revendications 4 à 7,
**caractérisé en ce que** le corps de rotation (9, 24, 43) est coincé au moyen d'au moins un aimant (12, 27) et/ou au moyen d'au moins un ressort mécanique (15, 45).

9. Dispositif d'arpentage (1) selon l'une des revendications 1 à 3 et/ou selon l'une des revendications 4 à 8,
**caractérisé en ce que** le perçage centré qui est de toute manière nécessaire pour l'usinage du composant correspondant (2, 7, 8, 22, 44) sur un tour et/ou sur une meuleuse est utilisé comme cavité (10, 11 ; 25, 26 ; 41, 42).

10. Dispositif d'arpentage (1) selon l'une des revendications 1 à 3 et/ou selon l'une des revendications 4 à 9,
**caractérisé en ce que** le corps de rotation (9, 24, 43), relié fermement à l'une des deux cavités (10, 11 ; 25, 26 ; 41, 42), est en particulier le composant de la composante de lacet (3), de l'onde de la composante d'inclinaison (22) ou la base (2).

11. Dispositif d'arpentage (1) selon l'une des revendications 1 à 3 et/ou selon l'une des revendications 4 à 10,
**caractérisé en ce que** le rotor (13, 7) peut être entraîné par un moteur à ondes progressives (16), cependant que la précontrainte du palier axial-radial formé par le corps de rotation (9, 24, 43) se fait par l'élément de précontrainte (15, 45) nécessaire pour le moteur à ondes progressives.

12. Dispositif d'arpentage (1) selon l'une des revendications 1 à 3 et/ou selon l'une des revendications 4 à 11,
**caractérisé en ce que** le rotor (13, 7) peut être entraîné par un moteur à flux axial (40), cependant que la précontrainte du corps de rotation (9, 24, 43) se fait par la force axiale magnétique générée par le moteur à flux axial.

13. Dispositif d'arpentage (1) selon l'une des revendications 1 à 3 et/ou selon l'une des revendications 4 à 12,
**caractérisé en ce que**
• le corps de rotation (9, 24, 43) est en matériau céramique ou en métal dur et
• le degré de dureté du matériau des cavités (10, 11 ; 25, 26 ; 41, 42) est plus faible que le degré de dureté du matériau du corps de rotation.

14. Procédé de fabrication pour dispositif d'arpentage (1) selon l'une des revendications 1 à 13, **caractérisé en ce que** le perçage centré qui est de toute manière nécessaire pour l'usinage du composant correspondant (2, 7, 8, 22, 44) sur un tour et/ou sur une meuleuse est utilisé comme cavité (10, 11 ; 25, 26 ; 41,42).

15. Dispositif d'arpentage (1), en particulier station totale, traceur ou scanner, avec au moins
• une trajectoire de faisceau de mesure optique,
• une base (2) pour le positionnement de l'appareil d'arpentage,
• une composante de lacet (3) positionnée sur la base en étant rotative autour d'un axe vertical (5) pour l'orientation azimutale de la trajectoire de faisceau optique et
• une composante d'inclinaison (4) positionnée dans la composante de lacet en étant rotative autour d'un axe de basculement (6) pour l'orientation en élévation de la trajectoire de faisceau optique,
**caractérisé en ce qu'**un corps de rotation (9, 43), en particulier une hémisphère ou un semi-ovoïde, est coincé en tant que palier pour
• la composante d'inclinaison (4) par rapport à
• la composante de lacet (3)
en étant autocentré dans une cavité (10, 11 ; 41, 42) qui est prévue sur des composants (8, 44) de la composante de lacet ou à une extrémité de l'onde de composante d'inclinaison (22) si bien que la composante d'inclinaison est positionnée sur palier lisse en étant rotative dans la composante de lacet aussi bien dans le sens radial qu'axial à l'aide du corps de rotation coincé dans la cavité, cependant que le corps de rotation est relié fermement à l'onde de composante d'inclinaison ou à la composante de lacet, en particulier est un composant de l'onde de composante d'inclinaison ou de la composante de lacet.

16. Dispositif d'arpentage (1), en particulier station totale, traceur ou scanner, avec au moins
• une trajectoire de faisceau de mesure optique,
• une base (2) pour le positionnement de l'appareil d'arpentage,
• une composante de lacet (3) positionnée sur la base en étant rotative autour d'un axe vertical (5) pour l'orientation azimutale de la trajectoire de faisceau optique et
• une composante d'inclinaison (4) positionnée dans la composante de lacet en étant rotative autour d'un axe de basculement (6) pour l'orientation en élévation de la trajectoire de faisceau optique,
**caractérisé en ce qu'**un corps de rotation (24), en particulier une hémisphère ou un semi-ovoïde, est coincé en tant que palier pour
• la composante de lacet (3) par rapport à
• la base (2)
en étant autocentré dans une cavité (25, 26) qui est prévue dans la base ou dans la composante de lacet si bien que la composante de lacet est positionnée sur palier lisse en étant rotative par rapport à la base aussi bien dans le sens radial qu'axial à l'aide du corps de rotation coincé dans la cavité, cependant que le corps de rotation est relié fermement à la composante de lacet ou à la base, en particulier est un composant de la composante de lacet ou de la base.
